# EUROPÄISCHE PATENTSCHRIFT

(11) **EP 2 090 837 B1**
(45) Veröffentlichungstag und Bekanntmachung des Hinweises auf die Patenterteilung: **16.03.2011**
(21) Anmeldenummer: 08002912.7
(22) Anmeldetag: 16.02.2008
(51) Int. Cl.: F24D 3/14, E04C 2/20

(54) **Dämmstoffplatte für Heizungsrohre und/oder Kühlrohre**
Insulating material board for heating pipes and/or cooling pipes
Plaque de matériau isolant pour tuyaux de chauffage et/ou de refroidissement

(43) Veröffentlichungstag der Anmeldung: 19.08.2009
(73) Patentinhaber: Roth Werke GmbH, 35232 Dautphetal (DE)
(72) Erfinder:
(74) Vertreter: Rohmann, Michael

(56) Entgegenhaltungen:
- FR-A- 2 883 314
- US-A- 4 338 994

## Beschreibung

Die Erfindung betrifft eine Dämmstoffplatte für Heizungsrohre und/oder Kühlrohre gemäβ Oberbegriff von Auspruch 1. Die Erfindung betrifft fernerhin ein Plattensystem mit zumindest einer Dämmstoffplatte, zumindest einem Heizrohr und/oder Kühlrohr und mit Rohrhaltern gemäβ Oberbegriff von Anspruch 13. Die erfindungsgemäße Dämmstoffplatte wird insbesondere für Fußbodenheizungsrohre eingesetzt. Die Rohre werden auf der Dämmstoffplatte verlegt und an der Dämmstoffplatte fixiert. Die Fixierung der Rohre erfolgt zweckmäßigerweise mit Hilfe von Rohrhaltern bzw. Rohrclipsen, die bevorzugt U-förmig ausgebildet sind und mit sogenannten Tackervorrichtungen - die Rohre übergreifend - in die Dämmstoffplatte eingebracht werden.

Aus der Praxis sind Dämmstoffplatten in verschiedenen Ausführungsformen bekannt. Dabei sind insbesondere Platten bekannt, die an ihrer Oberseite eine Vielzahl von Noppen aufweisen, zwischen denen die Rohre - vorzugsweise klemmend - verlegt und fixiert werden. Grundsätzlich haben sich solche Noppenplatten bewährt. Allerdings ist die Herstellung dieser Noppenplatten verhältnismäßig aufwendig. Nach der Fixierung der Rohre auf der Dämmstoffplatte werden die Rohre normalerweise in eine Verteilschicht eingebettet, bei der es sich in der Regel um eine Estrichschicht handelt. Bei vielen bekannten Dämmstoffplatten werden die Rohre aufgrund ihrer Auflageanordnung und/oder aufgrund ihrer Fixierung nicht vollständig bzw. nicht über ihren gesamten Umfang in die Verteilschicht/Estrichschicht eingebettet. Gattnungsgemäβe Däunnstoffplatten sind aus US-A- 4 338 994 oder FR-A- 2883 314 bekannt. Der Erfindung liegt die Erkenntnis zugrunde, dass diese unzureichende Einbettung der Rohre die Heiz- und/oder Kühlleistung nachteilhaft beeinträchtigt. Insoweit sind viele bekannte Dämmstoffplatten verbesserungsfähig.

Demgegenüber liegt der Erfindung das technische Problem zugrunde, eine Dämmstoffplatte der eingangs genannten Art anzugeben, die vielseitig und variabel einsetzbar ist und die eine optimale Heiz- und/oder Kühlleistung gewährleistet.

Zur Lösung dieses technischen Problems lehrt die Erfindung eine Dämmstoffplatte für Heizungsrohre und/oder Kühlrohre, wobei die Platte an ihrer Oberseite eine Mehrzahl von Rohrauflagestegen aufweist, wobei die auf den Rohrauflagestegen aufliegenden Rohre in den Zwischenräumen zwischen den Rohrauflagestegen mit ihrer plattenseitigen Rohrunterseite in einen auf die Platte aufbringbaren Baustoff, insbesondere in Estrich einbettbar, insbesondere vollständig einbettbar sind, und wobei die Rohranflagestege allesant parallel bzw im Wesentlichen parallel zueinander angeordnet sind. -Baustoff meint im Rahmen der Erfindung auch eine Baustoffmischung.

Nach besonders bevorzugter Ausführungsform der Erfindung ist die Dämmstoffplatte mehreckig, insbesondere rechteckig ausgestaltet und die Rohrauflagestege verlaufen schräg zu einer Seite, insbesondere zu einer Rechteckseite der Platte. Es liegt im Rahmen der Erfindung, dass die erfindungsgemäße Dämmstoffplatte rechteckig, insbesondere quadratisch ausgebildet ist.

Mit dem Begriff Rohrauflagestege ist gemeint, dass die Rohre nach der Verlegung auf diesen Rohrauflagestegen der Platte aufliegen. Zweckmäßigerweise haben die Rohre ausschließlich Kontakt mit diesen Rohrauflagestegen bzw. keinen Kontakt mit den weiteren Bereichen der Plattenoberseite. In den Zwischenräumen zwischen den Rohrauflagestegen sind die Rohre bzw. sind die plattenseitigen Rohrunterseiten der Rohre beabstandet zur Plattenoberfläche angeordnet.

Die Rohre werden nach und/oder während ihrer Verlegung an der Dämmstoffplatte fixiert, wozu vorzugsweise Rohrhalter bzw. Rohrclipse eingesetzt werden, die in der Dämmstoffplatte verankert werden. Rohrhalter bzw. Rohrclips meint im Rahmen der Erfindung ein Fixierungselement für das Rohr, das eine Aufnahme für das Rohr aufweist sowie zumindest ein Fixierungselement bzw. Verankerungselement zur Verankerung in der Dämmstoffplatte. Gemäß einer Ausführungsform handelt es sich dabei um U-förmige Rohrhalter, die zweckmäßigerweise mit Widerhaken in der Dämmstoffplatte verankert werden. Zum Einbringen der Rohrhalter in die Dämmstoffplatte wird empfohlenermaßen eine sogenannte Tackervorrichtung eingesetzt. Derartige Tackervorrichtungen und derartige Rohrhalter sind aus dem Stand der Technik hinlänglich bekannt. Die efindungsgemäße Dämmstoffplatte hat sich insbesondere in Bezug auf die vorstehend erläuterte Verlegung/Fixierung der Rohre bewährt.

Bei einer rechteckförmigen Dämmstoffplatte versteht es sich, dass die erfindungsgemäßen Rohrauflagestege schräg in Bezug auf alle Rechteckseiten der Platte verlaufen. - Es liegt im Rahmen der Erfindung, dass die Rohrauflagestege auf der gesamten Oberseite der Platte oder quasi auf der gesamten Oberseite der Platte verteilt sind. Mit dem Begriff schräg bezüglich einer Seite, insbesondere Rechteckseite ist im Rahmen der Erfindung gemeint, dass die Rohrauflagestege einen von 90° abweichenden Winkel mit der Seite, insbesondere Rechteckseite einschließen.

Es liegt im Rahmen der Erfindung, dass der Winkel zwischen den Rohrauflagestegen bzw. der Längsrichtung der Rohrauflagestege und einer Plattenseite, insbesondere einer Rechteckseite 10 bis 80°, insbesondere 20 bis 70°, vorzugsweise 30 bis 60° und bevorzugt 35 bis 55° beträgt. Nach besonders bevorzugter Ausführungsform der Erfindung beträgt der Winkel α zwischen den Rohrauflagestegen und der Plattenseite bzw. Rechteckseite 40 bis 50°, insbesondere 45° oder etwa 45°. Die Rohrauflagestege verlaufen dann diagonal über die Oberseite der Platte.

Gemäß empfohlener Ausführungsform weist zumindest ein Teil bzw. zumindest ein Großteil der Rohrauflagestege gleiche Abstände zueinander auf. Vorzugsweise weisen alle Rohrauflagestege einer Platte gleiche Abstände zueinander auf.

Nach bevorzugter Ausführungsform der Erfindung sind die Rohrauflagestege im Querschnitt U-förmig bzw. im Wesentlichen U-förmig ausgebildet. Zweckmäßigerweise zeichnen sich die Rohrauflagestege an ihrem Maximum und im Bereich ihrer Übergänge zur Plattenoberfläche durch große Radien aus. Es empfiehlt sich, dass alle Rohrauflagestege die gleiche Form aufweisen bzw. im Wesentlichen die gleiche Form aufweisen. - Empfohlenermaßen weisen die Rohrauflagestege eine Höhe von 1,5 bis 8 mm, insbesondere von 1,5 bis 6 mm, vorzugsweise von 2 bis 4,5 mm und bevorzugt von 2,5 bis 3,5 mm auf. Gemäß einer bewährten Ausführungsform beträgt die Höhe der Rohrauflagestege 3 mm oder in etwa 3 mm. Höhe meint dabei den Abstand des Maximums der Rohrauflagestege von der übrigen Plattenoberfläche. Es liegt im Rahmen der Erfindung, dass alle Rohrauflagestege die gleiche Höhe bzw. im Wesentlichen die gleiche Höhe aufweisen. Vorzugsweise haben die Rohrauflagestege über ihre Längserstreckung eine gleichbleibende Höhe bzw. eine im Wesentlichen gleichbleibende Höhe. Nach einer empfohlenen Ausführungsform der Erfindung beträgt die Breite der Rohrauflagestege 1,5 bis 4 mm, bevorzugt 2 bis 3 mm.

Es liegt im Rahmen der Erfindung, dass lediglich die Rohrauflagestege als aus der Oberseite der Platte hervorstehende Erhebungen vorgesehen sind und dass die Platte ansonsten erhebungsfrei bzw. im Wesentlichen erhebungsfrei ausgebildet ist. Es liegt fernerhin im Rahmen der Erfindung, dass die Platte - abgesehen von ihren Rohrauflagestegen - ansonsten eben bzw. im Wesentlichen eben ausgebildet ist. Erhebungsfrei meint im Rahmen der Erfindung insbesondere, dass auf der Oberseite der Platte - abgesehen von den Rohrauflagestegen - keine weiteren Erhebungen vorhanden sind, die höher als 1,5 mm, vorzugsweise höher als 2 mm und bevorzugt höher als 2,5 mm sind. Die Platte könnte also an ihrer Oberseite neben den Rohrauflagestegen beispielsweise eine geringe Profilierung bzw. Mikroprofilierung aufweisen, wobei die Erhebungen dieser Profilierung aber zweckmäßigerweise eine geringere Höhe aufweisen, als die Rohrauflagestege. Es liegt im Rahmen der Erfindung, dass die Rohrauflagestege die höchsten Erhebungen auf der Oberseite der Platte sind. - Viele aus dem Stand der Technik bekannten Dämmstoffplatten weisen auf ihrer Oberfläche einzelne Noppen auf, zwischen denen insbesondere die verlegten Rohre gehalten werden sollen. Nach besonders bevorzugter Ausführungsform der Erfindung ist die Oberseite der erfindungsgemäßen Dämmstoffplatten frei von solchen Noppen bzw. noppenfrei ausgebildet. Nach empfohlener Ausführungsform der Erfindung werden die Rohrauflagestege bzw. wird die Längserstreckung der Rohrauflagestege nicht durch Noppen unterbrochen.

Gemäß sehr bevorzugter Ausführungsform der Erfindung weist die Dämmstoffplatte eine unterseitige Dämmstoffschicht und eine auf der Oberseite der Dämmstoffschicht angeordnete bzw. fixierte Auflageschicht, insbesondere Auflagefolie auf, wobei die Rohrauflagestege in der Auflageschicht bzw. in der Auflagefolie ausgebildet sind. Mit den Begriffen Auflageschicht bzw. Auflagefolie ist gemeint, dass die zu verlegenden Rohre unmittelbar auf der Auflageschicht bzw. Auflagefolie aufliegen. Zweckmäßigerweise ist die Dicke der Auflageschicht bzw. Auflagefolie geringer bzw. wesentlich geringer als die Dicke der Dämmstoffschicht. Vorzugsweise handelt es sich bei der Auflageschicht um eine tiefgezogene Auflagefolie. Die Auflageschicht bzw. Auflagefolie wird empfohlenermaßen auf die Dämmstoffschicht aufkaschiert. - Nach einer bevorzugten Ausführungsform der Erfindung sind die Rohrauflagestege lediglich in der Auflageschicht bzw. Auflagefolie vorgesehen und die Auflageschicht/Auflagefolie wird auf die an ihrer Oberseite ebene bzw. im Wesentlichen ebene Dämmstoffschicht aufgebracht. Gemäß einer anderen Ausführungsform der Erfindung sind die Rohrauflagestege in der Auflageschicht bzw. Auflagefolie vorgesehen und an der Oberseite der Dämmstoffschicht sind ebenfalls Stege vorhanden, die im fertigen bzw. montierten Zustand der Platte an der Unterseite der Auflageschicht/Auflagefolie in die innen hohl ausgebildeten Rohrauflagestege komplementär eingreifen. Zweckmäßigerweise erfolgt dieses Eingreifen formschlüssig. - Nach empfohlener Ausführungsform besteht die Dämmstoffschicht aus einem aufgeschäumten Kunststoff, insbesondere aus aufgeschäumtem Polystyrol. Bei der Herstellung der Dämmstoffschicht kann so verfahren werden, dass die Dämmstoffschicht aus einem Schaumblock herausgetrennt wird.

Eine besonders bevorzugte Ausführungsform der Erfindung ist dadurch gekennzeichnet, dass die Auflageschicht an zumindest einer Seite der Platte über die Dämmstoffschicht übersteht und dass der überstehende Abschnitt der Auflageschicht ein Verbindungselement zur Verbindung der Platte mit einer benachbarten Dämmstoffplatte ist. Zweckmäßigerweise sind die überstehenden Abschnitte an zwei aneinander angrenzenden Seiten der Dämmstoffplatte vorgesehen. Es liegt im Rahmen der Erfindung, dass ein überstehender Abschnitt der Auflageschicht im verlegten Zustand mehrerer Platten auf der Oberseite der zugeordneten benachbarten Platte aufliegt. Die Auflage erfolgt zweckmäßigerweise auf einem Verbindungsabschnitt der Oberseite der benachbarten Platte, dessen Breite der Breite des überstehenden Abschnitts der anderen Platte entspricht. Es versteht sich, dass an einer Plattenseite mit Verbindungsabschnitt kein überstehender Abschnitt der Auflageschicht vorgesehen ist. Vorzugsweise ist an diesen Seiten mit Verbindungsabschnitt die Auflageschicht bzw. Auflagefolie um die Breite des Verbindungsabschnittes zurückgesetzt, so dass der überstehende Abschnitt einer benachbarten Platte auf der Dämmstoffschicht aufliegt. Es empfiehlt sich, dass ein überstehender Abschnitt der Auflageschicht unterseitig zumindest bereichsweise mit einem Kleber bzw. mit einer Klebeschicht versehen ist. Beim Verbinden der Platte wird der überstehende Abschnitt demnach auf der Oberseite der benachbarten Platte bzw. auf der Oberseite des Verbindungsabschnitts der benachbarten Platte aufgeklebt. - Vorzugsweise enden die Rohrauflagestege an zumindest einer Seite einer Platte mit Abstand vor dem Plattenrand. Dabei liegt es im Rahmen der Erfindung, dass die Rohrauflagestege an einer Plattenseite mit Verbindungsabschnitt vor dem Verbindungsabschnitt enden. Zweckmäßigerweise enden die Rohrauflagestege an zwei aneinander angrenzenden Seiten einer Platte mit Abstand vor dem Plattenrand. Es liegt im Rahmen der Erfindung, dass die Rohrauflagestege an den Plattenseiten mit Abstand vor dem Plattenrand enden, an denen kein überstehender Abschnitt der Auflageschicht vorhanden ist.

Zur Lösung des technischen Problems lehrt die Erfindung weiterhin ein Plattensystem mit zumindest einer Dämmstoffplatte der vorstehend beschriebenen Art, zumindest einem Heizrohr und/oder Kühlrohr und mit Rohrhaltern, wobei das Rohr mit den Rohrhaltern auf der Platte fixiert wird und das Rohr im montierten/fixierten Zustand auf den Rohrauflagestegen aufliegt. -Zwischen den Rohrauflagestegen ist die plattenseitige Rohrunterseite der Rohre mit Abstand zur Plattenoberseite angeordnet, so dass die Rohre mit ihrer plattenseitigen Rohrunterseite in einem auf die Platte aufbringbaren Baustoff, insbesondere in Estrich einbettbar, insbesondere vollständig einbettbar sind.

Der Erfindung liegt die Erkenntnis zugrunde, dass mit Hilfe einer erfindungsgemäßen Dämmstoffplatte eine funktionssichere und präzise Verlegung von Rohren, insbesondere von Fußbodenheizungsrohren möglich ist. Aufgrund der erfindungsgemäßen Ausgestaltung der Dämmstoffplatte wird gewährleistet, dass eine bei verlegten Rohren aufgebrachte Estrichschicht die Rohre über ihren gesamten Umfang ummantelt bzw. dass die Rohre über ihren gesamten Umfang in die Estrichschicht eingebettet sind. Bei Verwendung einer erfindungsgemäßen Dämmstoffplatte für ein Heiz- oder Kühlsystem kann eine sehr hervorragende Heiz- bzw. Kühlleistung erzielt werden. Der Erfindung liegt insoweit die Erkenntnis zugrunde, dass aufgrund der erfindungsgemäßen Ausgestaltung der Dämmstoffplatte ein optimaler Temperaturübergang auf den Estrich erfolgen kann. Es ist weiterhin zu betonen, dass eine erfindungsgemäße Dämmstoffplatte auf relativ einfache, wenig aufwendige und somit kostengünstige Weise hergestellt werden kann.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht einer erfindungsgemäßen Dämm- stoffplatte und
- Fig. 2: eine Draufsicht auf eine Mehrzahl von miteinander zu verbin- denden Dämmstoffplatten.

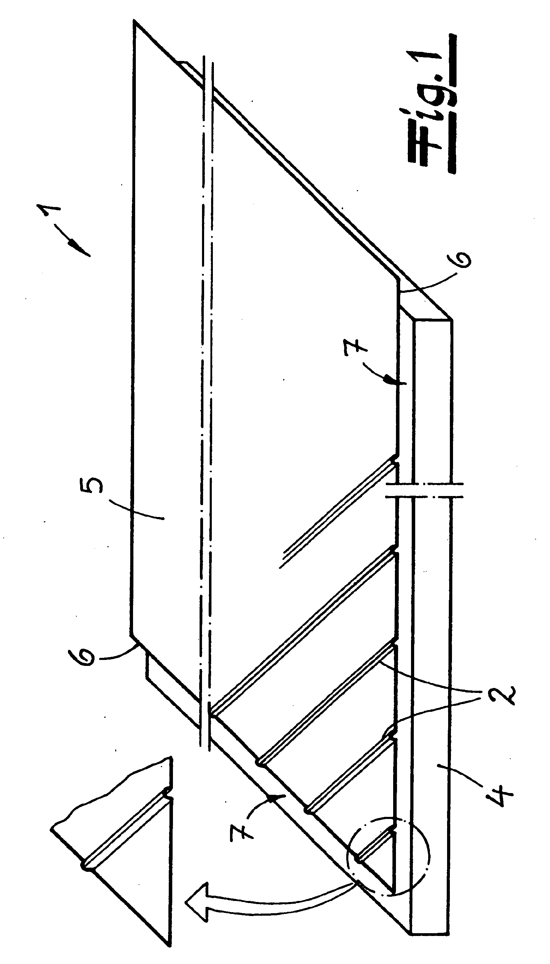

Die Erfindung betrifft eine Dämmstoffplatte 1 zur Verlegung von Heizungsrohren oder Kühlrohren, insbesondere zur Verlegung von Fußbodenheizungsrohren. Vorzugsweise und im Ausführungsbeispiel ist die Platte 1 rechteckig, insbesondere quadratisch ausgebildet. Die Platte 1 weist an ihrer Oberseite eine Mehrzahl von Rohrauflagestegen 2 auf. Auf diesen Rohrauflagestegen 2 werden die Rohre 3 bei ihrer Verlegung aufgelegt. Erfindungsgemäß verlaufen die Rohrauflagestege 2 bezüglich der Rechteckseiten der Platte 1 schräg bzw. diagonal. Vorzugsweise und im Ausführungsbeispiel schließen die Rohrauflagestege 2 jeweils mit einer Rechteckseite der Platte einen Winkel von 45° ein. Empfohlenermaßen und im Ausführungsbeispiel sind die Rohrauflagestege 2 quasi über die gesamte Oberseite der Platte 1 verteilt. Alle Rohrauflagestege 2 sind parallel zueinander angeordnet und alle Rohrauflagestege 2 weisen gleiche Abstände zueinander auf. Insbesondere in dem vergrößerten Ausschnitt der Fig. 1 ist erkennbar, dass die Rohrauflagestege zweckmäßigerweise im Querschnitt U-förmig ausgebildet sind. Vorzugsweise und im Ausführungsbeispiel weisen alle Rohrauflagestege 2 die gleiche Form auf. Es empfiehlt sich, dass die Rohrauflagestege 2 wie im Ausführungsbeispiel alle die gleiche Höhe bzw. im Wesentlichen die gleiche Höhe aufweisen und dass jeder Rohrauflagesteg 2 auch über seine Längserstreckung die gleiche Höhe bzw. im Wesentlichen die gleiche Höhe hat. Vorzugsweise und im Ausführungsbeispiel sind lediglich die erfindungsgemäßen Rohrauflagestege 2 als aus der Oberseite der Platte 1 hervorstehende Erhebungen vorgesehen. Ansonsten ist die Platte 1 an ihrer Oberseite erhebungsfrei ausgebildet.

Nach besonders bevorzugter Ausführungsform und im Ausführungsbeispiel weist die Platte 1 eine unterseitige Dämmstoffschicht 4 und eine auf der Oberseite der Dämmstoffschicht 4 angeordnete Auflagefolie 5 auf. Im Ausführungsbeispiel sind die Rohrauflagestege 2 lediglich in der Auflagefolie 5 ausgebildet und diese profilierte Auflagefolie 5 liegt auf der an ihrer Oberseite ebenen Dämmstoffschicht 4 auf. Die Dämmstoffschicht 4 besteht empfohlenermaßen aus geschäumtem Polystyrol. Bei der Auflagefolie 5 mag es sich um eine tiefgezogene Auflagefolie 5 aus Kunststoff handeln. In der Fig. 1 ist erkennbar, dass die Dicke der Dämmstoffschicht 4 wesentlich größer ist als die Dicke der Auflagefolie 5.

In den Figuren ist dargestellt, dass die Auflagefolie 5 an zwei aneinandergrenzenden Seiten der Platte 1 über die Dämmstoffschicht 4 übersteht. Die überstehenden Abschnitte 6 der Auflagefolie 5 liegen im verlegten Zustand der Platten 1 auf den benachbarten Platten 1 auf. Um eine feste Verbindung herzustellen, sind die überstehenden Abschnitte 6 vorzugsweise an ihrer Unterseite mit einer Klebeschicht versehen. In den Figuren ist fernerhin erkennbar, dass an den zwei anderen aneinandergrenzenden Seiten der Platte 1 die Auflagefolie 5 mit Abstand vor dem Plattenrand endet, so dass sich hier Verbindungsabschnitte 7 der Dämmstoffschicht 4 ergeben, auf denen die überstehenden Abschnitte 6 benachbarter Platten 1 aufliegen. Es versteht sich, dass im Ausführungsbeispiel auch die in der Auflagefolie 5 ausgebildeten Rohrauflagestege 2 mit entsprechendem Abstand vor dem Plattenrand enden.

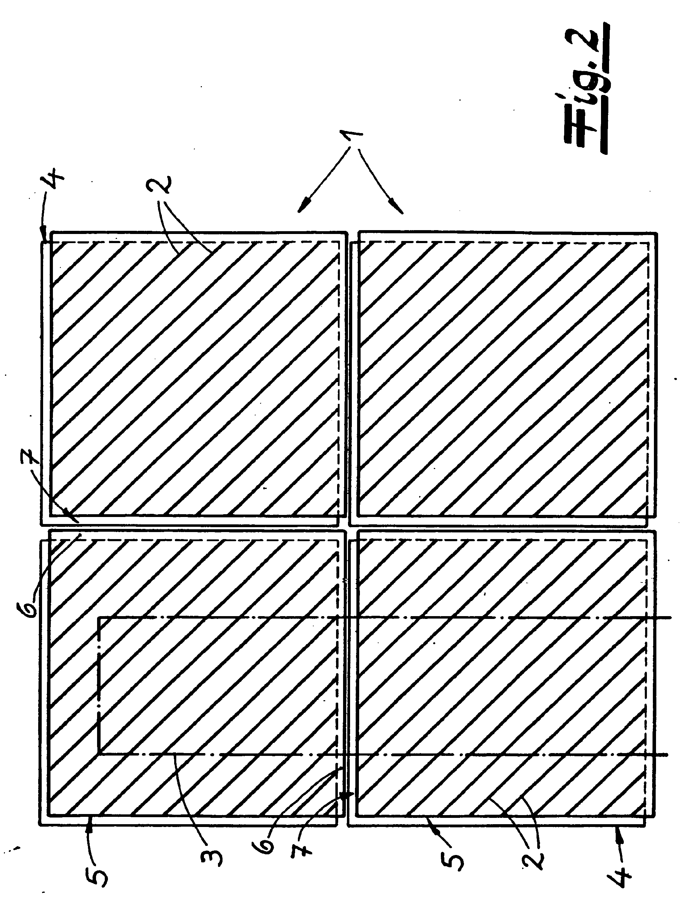

Fig. 2 zeigt vier miteinander zu verbindende erfindungsgemäße Platten 1. Die überstehenden Abschnitte 6 der Platten sind hier noch nicht auf den Verbindungsabschnitten 7 der benachbarten Platten 1 zur Auflage gebracht worden, so dass die Platten 1 noch mit entsprechendem Abstand zueinander angeordnet sind. Es liegt im Rahmen der Erfindung, dass die Platten 1 mit der Maßgabe verlegt werden, dass die Rohrauflagestege 2 zweier benachbarter Platten miteinander fluchten bzw. aneinander anschließen. Das ist in Fig. 2 erkennbar. In Fig. 2 sind außerdem verlegte Rohre 3 dargestellt, die im Ausführungsbeispiel zu einer Fußbodenheizung gehören. Es ist erkennbar, dass die Rohrauflagestege 2 schräg zu den verlegten Rohren 3 verlaufen, so dass stets ein entsprechender Abstand zwischen den Rohren 3 und der Oberseite der Platte 1 gewährleistet bleibt. Nach Aufbringen einer Estrichschicht können die Rohre 3 vollständig, d. h. über ihren gesamten Umfang in die Estrichschicht eingebettet werden.

## Patentansprüche

1. Dämmstoffplatte (1) für Heizungsrohre und/oder Kühlrohre, wobei die Platte (1) an ihrer Oberseite eine Mehrzahl von Rohrauflagestegen (2) aufweist, wobei die auf den Rohrauflagestegen (2) aufliegenden Rohre in den Zwischenräumen zwischen den Rohrauflagestegen (2) mit ihrer plattenseitigen Unterseite in einen auf die Platte (1) aufbringbaren Baustoff, insbesondere in Estrich einbettbar, insbesondere vollständig einbettbar sind, **dadurch gekennzeichnet, dass** die Rohrauflagestege (2) allesamt parallel bzw. im Wesentlichen parallel zueinander angeordnet sind.

2. Dämmstoffplatte nach Anspruch 1, wobei die Platte (1) mehreckig, insbesondere rechteckig ausgestaltet ist und wobei die Rohrauflagestege (2) schräg bezüglich einer Seite, insbesondere bezüglich einer Rechteckseite der Platte (1) verlaufen.

3. Dämmstoffplatte nach Anspruch 2, wobei der Winkel α zwischen den Rohrauflagestegen (2) und einer Plattenseite, insbesondere Rechteckseite 10 bis 80°, insbesondere 20 bis 70°, vorzugsweise 30 bis 60° und bevorzugt 35 bis 55° beträgt.

4. Dämmstoffplatte nach einem der Ansprüche 1 bis 3, wobei zumindest ein Teil bzw. zumindest ein Großteil der Rohrauflagestege (2) gleiche Abstände zueinander aufweisen.

5. Dämmstoffplatte nach einem der Ansprüche 1 bis 4, wobei die Rohrauflagestege (2) im Querschnitt U-fömig bzw. im Wesentlichen U-fömig ausgebildet sind.

6. Dämmstoffplatte nach einem der Ansprüche 1 bis 5, wobei die Rohrauflagestege (2) eine Höhe von 1,5 bis 8 mm, insbesondere von 1,5 bis 6 mm, vorzugsweise von 2 bis 4,5 mm und bevorzugt von 2, 5 bis 3,5 mm aufweisen.

7. Dämmstoffplatte nach einem der Ansprüche 1 bis 6, wobei lediglich die Rohrauflagestege (2) als aus der Oberseite der Platte (1) hervorstehende Erhebungen vorgesehen sind und die Platte (1) ansonsten erhebungsfrei bzw. im Wesentlichen erhebungsfrei ausgebildet ist.

8. Dämmstoffplatte nach einem der Ansprüche 1 bis 7, wobei die Platte (1) eine unterseitige Dämmstoffschicht (4) und eine auf der Oberseite der Dämmstoffschicht (4) angeordnete Auflageschicht, insbesondere eine Auflagefolie (5) aufweist und wobei die Rohrauflagestege (2) in der Auflageschicht bzw. Auflagefolie (5) ausgebildet sind.

9. Dämmstoffplatte nach Anspruch 8, wobei die Dämmstoffschicht (4) aus einem aufgeschäumten Kunststoff, insbesondere aus aufgeschäumtem Polystyrol besteht.

10. Dämmstoffplatte nach einem der Ansprüche 8 oder 9, wobei die Auflageschicht an zumindest einer Seite der Platte über die Dämmstoffschicht übersteht und wobei der überstehende Abschnitt (6) der Auflageschicht ein Verbindungselement zur Verbindung der Platte (1) mit einer benachbarten Dämmstoffplatte (1) ist.

11. Dämmstoffplatte nach Anspruch 10, wobei der überstehende Abschnitt (6) der Auflageschicht unterseitig zumindest bereichsweise mit einer Klebeschicht versehen ist.

12. Dämmstoffplatte nach einem der Ansprüche 1 bis 11, wobei die Rohrauflagestege (2) an zumindest einer Seite der Platte (1) mit Abstand vor dem Plattenrand enden.

13. Plattensystem mit zumindest einer Dämmstoffplatte (1) nach einem der Ansprüche 1 bis 13, zumindest einem Heizrohr und/oder Kühlrohr und mit Rohrhaltern, wobei das Rohr mit den Rohrhaltern auf der Platte (1) fixierbar ist, und wobei das Rohr im montierten/fixierten Zustand auf den Rohrauflagestegen (2) aufliegt.

## Claims

1. An insulating material board (1) for heating pipes and/or cooling pipes, wherein the board (1) has a plurality of pipe support bars (2) on its upper side, wherein the pipes resting on pipe support bars (2) can be embedded, in particular completely embedded, in the intermediate spaces between the pipe support bars (2) with the lower pipe side on the board side in a construction material, in particular screed, which can be applied on the board (1), **characterized in that** all of the pipe support bars (2) are arranged parallel or substantially parallel to each other.

2. The insulating material board according to claim 1, wherein the board (1) is polygonal, in particular rectangular in shape and wherein the pipe support bars (2) run obliquely with respect to a side, in particular with respect to a rectangle side of the board (1).

3. The insulating material board according to claim 2, wherein the angle α between pipe support bars (2) and a board side, in particular rectangle side, is 10 to 80°, in particular 20 to 70°, preferably 30 to 60°, and preferred 35 to 55°.

4. The insulating material board according to any one of the claims 1 to 3, wherein at least part or at least a majority of the pipe support bars (2) have identical distances to each other.

5. The insulating material board according to any one of the claims 1 to 4, wherein the pipe support bars (2) are U-shaped or substantially U-shaped in cross-section.

6. The insulating material board according to any one of the claims 1 to 5, wherein the pipe support bars (2) have a height of 1.5 to 8 mm, in particular of 1.5 to 6 mm, preferably of 2 to 4.5 mm and preferred of 2.5 to 3.5 mm.

7. The insulating material board according to any one of the claims 1 to 6, wherein only the pipe support bars (2) are provided as elevations projecting from the upper side of the board (1) and apart from that, the board (1) is formed elevation-free or substantially elevation-free.

8. The insulating material board according to any one of the claims 1 to 7, wherein the board (1) has an insulating material layer (4) on the lower side and a cover layer, in particular a cover foil (5) arranged on the upper side of the insulating material layer (4) and wherein the pipe support bars (2) are formed in the cover layer or cover foil (5).

9. The insulating material board according to claim 8, wherein the insulating material layer (4) consists of a foamed plastic, in particular of foamed polystyrene.

10. The insulating material board according to any one of the claims 8 or 9, wherein the cover layer protrudes on at least one side of the board beyond the insulating material layer and wherein the protruding section (6) of the cover layer is a connecting element for connecting the board (1) to an adjacent insulating material board (1).

11. The insulating material board according to claim 10, wherein the protruding section (6) of the cover layer is provided on the lower side at least in certain regions with an adhesive layer.

12. The insulating material board according to any one of the claims 1 to 11, wherein on at least one side of the board (1), the pipe support bars (2) end at a distance from the board edge.

13. A board system with at least one insulating material board (1) according to any one of the claims 1 to 13, at least one heating pipe and/or cooling pipe and with pipe holders, wherein the pipe can be fixed with the pipe holders on the board (1) and wherein in the mounted/fixed state, the pipe rests on the pipe support bars (2).

## Revendications

1. Plaque de matériau isolant (1) pour des tuyaux de chauffage et/ou de refroidissement, dans laquelle la plaque (1) présente sur sa face supérieure une pluralité de traverses de support de tuyaux (2), sachant que les tuyaux reposant sur les traverses de support de tuyaux (2) sont encastrables en particulier en chape, en particulier complètement encastrables dans les espaces intermédiaires entre les traverses de support de tuyaux (2) avec leur sous-face côté plaque dans un matériau de construction pouvant être posé sur la plaque (1), **caractérisée en ce que** les traverses de support de tuyaux (2) sont toutes placées parallèlement respectivement essentiellement parallèlement l'une à l'autre.

2. Plaque de matériau isolant selon la revendication 1, dans laquelle la plaque (1) a plusieurs angles, en particulier est rectangulaire, et dans laquelle les traverses de support de tuyaux (2) sont obliques par rapport à un côté, en particulier par rapport à un côté du rectangle de la plaque (1).

3. Plaque de matériau isolant selon la revendication 2, dans laquelle l'angle α entre les traverses de support de tuyaux (2) et un côté de plaque, en particulier le côté du rectangle, est de 10 à 80°, en particulier de 20 à 70°, de préférence de 30 à 60° et de manière préférée de 35 à 55°.

4. Plaque de matériau isolant selon l'une des revendications 1 à 3, dans laquelle au moins une partie respectivement au moins une grande partie des traverses de support de tuyaux (2) présentent des distances égales entre elles.

5. Plaque de matériau isolant selon l'une des revendications 1 à 4, dans laquelle les traverses de support de tuyaux (2) ont une section transversale en U, ont respectivement essentiellement une forme en U.

6. Plaque de matériau isolant selon l'une des revendications 1 à 5, dans laquelle les traverses de support de tuyaux (2) ont une hauteur de 1,5 à 8 mm, en particulier de 1,5 à 6 mm, de préférence de 2 à 4,5 mm et de manière plus préférée de 2,5 à 3,5 mm.

7. Plaque de matériau isolant selon l'une des revendications 1 à 6, dans laquelle seules les traverses de support de tuyaux (2) sont prévues comme des proéminences faisant saillie de la face supérieure de la plaque (1) et autrement la plaque (1) est formée sans proéminence, respectivement essentiellement sans proéminence.

8. Plaque de matériau isolant selon l'une des revendications 1 à 7, dans laquelle la plaque (1) présente une couche de matériau isolant (4) en sous-face et une couche de support, en particulier un film de support (5), placé sur la face supérieure de la couche de matériau isolant (4), et dans laquelle les traverses de support de tuyaux (2) sont formées dans la couche de support respectivement le film de support (5).

9. Plaque de matériau isolant selon la revendication 8, dans laquelle la couche de matériau isolant (4) est composée d'un plastique moussé, en particulier de polystyrène moussé.

10. Plaque de matériau isolant selon l'une des revendications 8 ou 9, dans laquelle la couche de support fait saillie au moins sur une face de la plaque au-dessus de la couche de matériau isolant et dans laquelle la section en saillie (6) de la couche de support est un élément de liaison pour relier la plaque (1) à une plaque de matériau isolant (1) adjacente.

11. Plaque de matériau isolant selon la revendication 10, dans laquelle la section en saillie (6) de la couche de support est munie sur sa sous-face d'une couche de colle au moins par endroits.

12. Plaque de matériau isolant selon l'une des revendications 1 à 11, dans laquelle les traverses de support de tuyaux (2) se terminent sur au moins un côté de la plaque (1) à distance du bord de la plaque.

13. Système de plaque comprenant au moins une plaque de matériau isolant (1) selon l'une des revendications 1 à 13, au moins un tuyau de chauffage et/ou de refroidissement et comprenant des fixations de tuyau, sachant que le tuyau peut être fixé sur la plaque (1) avec les fixations de tuyau et dans laquelle le tuyau en l'état monté/fixé repose sur les traverses de support de tuyaux (2).
